# EUROPÄISCHE PATENTSCHRIFT

(11) **EP 2 792 604 B1**
(45) Veröffentlichungstag und Bekanntmachung des Hinweises auf die Patenterteilung: **27.04.2016**
(21) Anmeldenummer: 14161648.2
(22) Anmeldetag: 26.03.2014
(51) Int. Cl.: B65C 9/00, B67C 7/00

(54) **Behälterbehandlungsmaschine**
Container handling machine
Machine de traitement de récipient

(30) Priorität: 15.04.2013 DE 102013206667
(43) Veröffentlichungstag der Anmeldung: 22.10.2014
(73) Patentinhaber: Krones AG, 93073 Neutraubling (DE)
(72) Erfinder: Hafner, Dieter, 93073 Neutraubling (DE); Eichhammer, Tobias, 93073 Neutraubling (DE); Högl, Bernhard, 93073 Neutraubling (DE); Bergers, Andreas, 93073 Neutraubling (DE)
(74) Vertreter: Grünecker Patent- und Rechtsanwälte PartG mbB

(56) Entgegenhaltungen:
- EP-A1- 0 539 735
- WO-A1-2012/117426
- DE-U1- 8 903 884
- DE-U1-202007 017 932

## Beschreibung

Die vorliegende Erfindung betrifft eine Behälterbehandlungsmaschine, insbesondere eine Etikettiermaschine.

### Stand der Technik

Aus dem Stand der Technik sind Behälterbehandlungsmaschinen bekannt.

So zeigt beispielsweise die WO 2011/027372 eine Behälterbehandlungsmaschine, wobei ein Stützrahmen vorgesehen ist, der über Führungen verfügt, an denen lösbar Etikettieraggregate befestigt werden können, so dass diese an bestimmten Positionen um ein Karussell positioniert werden können.

Weiterhin zeigt die WO 2011/045819 A1 eine Stützstruktur, auf der Zuförderer und Drehsterne, die auf einer Tischplatte befestigt sind, angeordnet sind und eine separate, damit verbindbare Trägerstruktur für ein Karussell.

Weiterhin zeigt die WO 2012/117426 A eine Behälterbehandlungsmaschine mit einem Rahmen und einem Portal gemäß dem Oberbegriff des Anspruchs 1.

### Aufgabe

Ausgehend von dem Stand der Technik besteht die Aufgabe darin, eine möglichst effektive modularisierte Bauweise für Behälterbehandlungsmaschinen, wie beispielsweise Etikettiermaschinen, bereitzustellen, die insbesondere eine einfache Montage und effektive Fertigung ermöglicht.

### Lösung

Diese Aufgabe wird erfindungsgemäß durch die Behälterbehandlungsmaschine nach unabhängigem Anspruch 1, sowie durch das Sortiment von Behälterbehandlungsmaschinen nach Anspruch 5 gelöst.

Zweckmäßige Ausgestaltungen der Erfindung sind in den Unteransprüchen erfasst.

Die erfindungsgemäße Behälterbehandlungsmaschine, wie beispielsweise eine Etikettiermaschine, umfasst ein Portal und ein Grundgestell mit einem Karussell zur Aufnahme von Behältern zur Behandlung und ist dadurch gekennzeichnet, dass das Portal eine Öffnung umfasst, durch die zu behandelnde Behälter zum Karussell befördert werden können, wobei die Öffnung begrenzt ist durch einen Stützteil, an dem Stützen zum Abstützen des Portals am Boden vorgesehen sind, ein Oberteil, an dem zumindest ein Teil des Karussells befestigt ist, und zwei Verbindungsteile, die das Stützteil und das Oberteil miteinander verbinden, wobei sich das Oberteil von einem Verbindungsteil zum anderen Verbindungsteil erstreckt. Durch das Vorsehen eines entsprechenden Portals und eines Grundgestells wird zum Einen eine schnelle und leichte Montage der Etikettiermaschine ermöglicht, wobei aufwändige Justagevorgänge teilweise, bevorzugt ganz, entfallen können. Außerdem wird der Transport dieser Bestandteile erleichtert. Weiterhin kann am Portal wenigstens eine Komponente für den Betrieb der Behälterbehandlungsmaschine, vorzugsweise ein Schaltschrank, oder eine Elektro- oder eine Pneumatikkomponente, vorgesehen sein. Somit wird eine kompakte Bauweise der Behälterbehandlungsmaschine realisiert.

Erfindungsgemäß ist das Oberteil derart mit dem Karussell verbunden, dass eine Drehmomentstützung vom Karussell durch das Oberteil erfolgt. Somit kann das Portal, insbesondere das Oberteil, die Funktion der Drehmomentstützung übernehmen, wodurch zusätzliche Bauteile hierfür entfallen. In einer Ausführungsform ist das Grundgestell wenigstens am Stützteil durch Mittel zur Befestigung befestigt. Somit wird eine Stabilisierung des Portals und des Grundgestells untereinander gewährleistet und gleichzeitig eine Ausrichtung dieser Baugruppen ermöglicht.

Weiterhin kann das Grundgestell Stützen zum Abstützen des Grundgestells am Boden umfassen. So kann das Grundgestell eigenständig am Boden einer Werkshalle abgestützt und gegebenenfalls entsprechend ausgerichtet werden.

Weiterhin kann ein Sortiment von Behälterbehandlungsmaschinen vorgesehen sein, das dadurch gekennzeichnet ist, dass Abmessungen des Portals für jede der Behälterbehandlungsmaschinen des Sortiments von Behälterbehandlungsmaschinen identisch sind, die Größe des Karussells jedoch verschieden ist. Ein solches Sortiment kann zu deutlich geringeren Kosten hergestellt werden und auch ein Austausch von eventuell defekten Portalen an Behälterbehandlungsmaschinen ist so sehr einfach möglich.

Beispielhaft wird auch eine Tischplatte für eine Behälterbehandlungsmaschine, insbesondere eine Etikettiermaschine beschrieben, die in Verbindung mit der Behälterbehandlungsmaschine der Erfindung genutzt werden könnte, wobei die Tischplatte einen Karussellbereich aufweist, in dem ein Karussell angeordnet und mit der Tischplatte drehbar gelagert verbunden werden kann und die Tischplatte einen Drehsternbereich aufweist, in dem wenigstens ein Drehstern, der Behälter dem Karussell zu- oder abfördern kann, angeordnet und mit der Tischplatte drehbar gelagert verbunden werden kann, wobei die Tischplatte als ein massives und einstückiges Werkstück ausgebildet ist. Eine solche Tischplatte erlaubt eine vereinfachte Befestigung von Karussells und Drehsternen, wobei diese bereits durch die Tischplatte eine gewisse, wenn nicht vollständige, Ausrichtung zueinander erfahren.

Die Tischplatte könnte weiterhin einen Motorbereich umfassen, in dem Motoren innerhalb und/oder außerhalb, auf der Seite der Karussellposition der Tischplatte angeordnet sein können. So wird eine kompakte Bauweise unter Einbeziehung der Motoren, die zum Betrieb von Drehsternen oder auch des Karussells nötig sind, ermöglicht.

Die Motoren könnten in, auf der Tischplatte vorgesehenen, Säulen angeordnet sein. Durch die Anordnung von Motoren in dafür vorgesehenen Säulen werden diese vor Umwelteinflüssen, insbesondere Klebstoffen oder umherspritzenden Flüssigkeiten, geschützt.

Weiterhin könnte vorgesehen sein, dass die Tischplatte das Karussell und ein Portal, durch das Behälter dem Karussell zu- oder abgeführt werden können, miteinander verbinden kann. Durch eine solche Verbindung wird ein Ausnivellieren erleichtert, vorzugsweise vollständig überflüssig gemacht.

An der von der Karussellposition abgewandten Seite der Tischplatten können Mittel zur Führung und Befestigung von elektrischen und mechanischen Systemen vorgesehen sein. Das gewährt eine kompakte Bauweise und schützt gleichzeitig die elektrischen und mechanischen Systeme vor Umwelteinflüssigen, insbesondere vor Klebemitteln oder Flüssigkeiten, die im Karussell verwendet werden.

Es könnte in Kombination mit der erfindungsgemäßen Behälterbehandlungsmaschine auch ein Sortiment von Tischplatten für ein Sortiment von Behälterbehandlungsmaschinen vorgesehen sein, wobei äußere Abmessungen des Drehsternbereichs für jede Behälterbehandlungsmaschine des Sortiments von Behälterbehandlungsmaschinen identisch sind, und ein Abstand von Aufnahmen in einer Tischplatte für ein Sternrad eines Einlaufsterns und ein Sternrad eines Auslaufsterns in dem Drehsternbereich, in dem die Drehsterne drehbar gelagert werden können, für Behälterbehandlungsmaschinen des Sortiments von Behälterbehandlungsmaschinen verschieden ist. Ein solches Sortiment und insbesondere die entsprechenden Tischplatten, sind deutlich einfacher zu fertigen als Tischplatten, die für jede Behälterbehandlungsmaschine extra angepasst werden müssen, wodurch eine erhebliche Kostenreduktion bei der Fertigung der Tischplatten erzielt werden kann.

Weiterhin können äußere Abmessungen des Karussellbereichs von zumindest zwei Tischplatten des Sortiments verschieden sein und eine Position, in der eine Hauptachse des Karussells in dem Karussellbereich angeordnet und drehbar gelagert werden kann, von zumindest zwei Tischplatten des Sortiments einen verschiedenen Abstand vom Drehsternbereich aufweisen.

Beispielhaft könnte auch eine Tischplatte für eine Behälterbehandlungsmaschine, insbesondere eine Etikettiermaschine vorgesehen sein, die ein Karussell umfasst, wobei wenigstens das Karussell an der Tischplatte angeordnet werden kann, wobei die Tischplatte auf einer von einer Karussellposition abgewandten Seite eine von der Tischplatte getragene Befestigungsanordnung umfasst, an der Behandlungsaggregate befestigt werden können. So wird eine zentrale Anordnung von beispielsweise Behandlungsaggregaten gewährleistet, die gleichzeitig ein hohes Maß an Stabilität liefert.

Die Befestigungsanordnung könnte aus wenigstens zwei, einem ersten und einem zweiten, ringförmigen Elementen zusammengesetzt ist, die konzentrisch bezüglich einer Drehachse des Karussells und in Richtung der Drehachse des Karussells übereinander angeordnet sind, wobei das erste ringförmige Element über eine Verbindung mit der Tischplatte verbunden ist. Eine solche Ausgestaltung der Tischplatte und der Befestigungsanordnung gestattet eine flexiblere Bereitstellung der Befestigungsanordnung abhängig von den zu befestigenden Behandlungsaggregaten oder anderen Vorrichtungen. Statt der zwei ringförmigen Elemente kann auch nur ein ringförmiges Element vorgesehen sein.

Beispielhaft kann das erste ringförmige Element einen größeren Innendurchmesser als das zweite ringförmige Element aufweisen. So wird eine innenliegende Nut erzeugt, die eine sichere Befestigung von Vorrichtungen ermöglicht.

Weiterhin könnte das erste ringförmige Element einen kleineren Außendurchmesser als das zweite ringförmige Element aufweisen. Auch hier wird eine sicherere Befestigung gewährleistet und in Kombination mit obigem Beispiel eine doppelseitige Nut bereitgestellt, die gegenüber einer einfachen Nut eine höhere Festigkeit der Verbindung gewährleistet.

Die Befestigungsanordnung und die Tischplatte könnten einstückig, als aus einem Werkstück hergestellt vorgesehen sein. Eine solche Tischplatte mit Befestigungsanordnung aus einem einzigen Werkstück erhöht weiterhin die Festigkeit und reduziert mögliche Fehler bei der Montage.

Beispielhaft könnte die Befestigungsanordnung als C-Form und/oder als Nut ausgebildet sein.

Weiterhin kann die Befestigungsanordnung Einkerbungen aufweisen, die in Richtung der Tischplatte zur Drehachse des Karussells zulaufend ausgebildet sind und/oder die Befestigungsanordnung Einkerbungen aufweisen, die in Richtung der Tischplatte von der Drehachse des Karussells weglaufend ausgebildet sind. So wird ein Einführen von zu befestigenden Vorrichtungen, wie beispielsweise Behandlungsaggregaten, erleichtert.

In einem weiteren Beispiel ergänzend zur Erfindung kann eine Tischplatte für eine Behälterbehandlungsmaschine, insbesondere eine Etikettiermaschine vorgesehen sein, die ein an der Tischplatte anordenbares Karussell umfasst, dadurch gekennzeichnet, dass die Tischplatte ein beschichtetes Kernmaterial umfasst. Da so die Tischplatte nicht vollständig aus beispielsweise Edelstahl oder einem anderen Metall gefertigt werden muss, kann es hier, insbesondere bei Verwendung von Kunststoffen zur Beschichtung, zu erheblichen Gewichtseinsparungen und auch einer Kostenersparnis bei der Fertigung kommen.

Das Kernmaterial kann Edelstahl oder Nicht-Edelstahl, oder Aluminium sein.

Die Beschichtung könnte einen Kunststoff umfassen oder aus diesem bestehen. Hier wird insbesondere eine Gewichtsersparnis gegenüber einer vollständig aus dem Kernmaterial bestehenden Tischplatte mit gleichen Abmessungen erreicht und gleichzeitig kann der Kunststoff gewisse zusätzliche vorteilhafte Eigenschaften aufweisen.

Es könnte in der Tischplatte eine Bohrung vorgesehen sein, die zur Befestigung von Maschinenteilen ausgebildet ist, wobei in die Bohrung ein ringförmiges Bauteil eingesetzt ist. Das ringförmige Bauteil kann hier die Beschichtung der Tischplatte schützen und gleichzeitig, entsprechend den Anforderungen des zu befestigenden Maschinenteils, ausgebildet sein. Das ringförmige Bauteil kann zumindest teilweise aus Edelstahl bestehen. Die Verwendung von Edelstahl macht das ringförmige Bauteil widerstandsfähig und möglichst unempfindlich gegenüber Benetzung mit Flüssigkeit und damit verbundenem Oxidieren.

Außerdem könnte die Tischplatte so ausgebildet sein, dass sie wenigstens eines oder mehrere von schmutzabweisend, farbabweisend, elastisch, mit Noppen versehen, antihaftend ist. Diese zusätzlichen Eigenschaften der Kunststoffbeschichtung können einzeln oder in Kombination, abhängig von dem Verwendungszweck der Tischplatte, vorteilhaft sein und beispielsweise die Reinigung erleichtern.

In einem weiteren, die Erfindung ergänzenden Beispiel, könnte eine Tischplatte für eine Behälterbehandlungsmaschine, insbesondere eine Etikettiermaschine bereitgestellt werden, die ein an der Tischplatte anordenbares Karussell umfasst, wobei zu behandelnde Behälter über an der Tischplatte anordenbare Drehsterne zum Karussell befördert und abgeführt werden können, dadurch gekennzeichnet, dass an der Tischplatte, auf der Seite der Karussellposition, befestigte Säulen vorgesehen sind, in denen Platz für Motoren zum Betrieb der Drehsterne vorgesehen ist, wobei die Drehsterne elektrisch gekoppelt ausgebildet sein können. Die Säulen bieten einen Schutz vor Umwelteinflüssen für die Motoren, wodurch deren Langlebigkeit erhöht wird.

Ferner könnte an der, der Karussellposition abgewandten Seite der Tischplatte Mittel zur Befestigung weiterer Komponenten vorgesehen sein, wobei eine Kopplung dieser weiteren Komponenten mit einem Motor elektrisch ausgebildet sein kann. Eine so ausgebildete Befestigung weiterer Komponenten schützt diese beispielsweise vor Klebstoffen oder Flüssigkeiten, die während des Betriebs der Behälterbehandlungsmaschine anfallen können.

Die Motoren können Servomotoren sein.

Beispielsweise könnten auch an der, der Karussellposition abgewandten Seite der Tischplatte, im der Drehsternposition gegenüberliegenden Bereich Mittel zur Befestigung von wenigstens einem von Verkabelungen, Steuereinrichtung, Stromversorgung, insbesondere Notstromversorgung, Pneumatik, Schmiersystem vorgesehen sein. Hier wird ein Schutz besonders empfindlicher Bauteile, wie beispielsweise Verkabelungen, vor Kontakt mit Flüssigkeiten gewährt.

### Kurzbeschreibung der Figuren

- Fig. 1: Schematische Darstellung einer Ausführungsform einer Behälterbehandlungsmaschine.
- Fig. 2a+b: Darstellung verschiedener Ausführungsformen von Portal und Grundgestell.
- Fig. 3: Darstellung einer Tischplatte.
- Fig. 4a-c: Darstellung eines Sortiments von Tischplatten.
- Fig. 5a-c: Darstellung eines Sortiments von Tischplatten.
- Fig. 6: Darstellung einer Tischplatte.
- Fig. 7: Darstellung einer Tischplatte mit Befestigungseinrichtungen.
- Fig. 8a-d: Darstellungen von Befestigungsanordnungen.
- Fig. 9: Beschichtete Tischplatte.
- Fig. 10: Darstellung einer Tischplatte mit Bohrungen.
- Fig. 11: Darstellung einer Tischplatte.
- Fig. 12: Darstellung einer Tischplatte mit zusätzlichen Befestigungseinrichtungen.

### Ausführliche Beschreibung

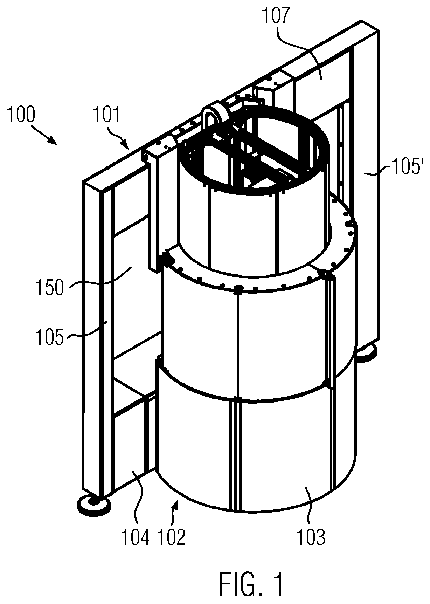

Fig. 1 zeigt eine erfindungsgemäße Behälterbehandlungsmaschine. Dabei kann es sich beispielsweise um eine Etikettiermaschine oder Blasformmaschine zur Herstellung von Behältern, wie Flaschen, handeln. Sie umfasst ein Portal 101 sowie ein allgemein mit Behälterbehandlungsmodul bezeichnetes Bauteil 102. Das Behälterbehandlungsmodul 102 umfasst dabei wenigstens ein hier nur schematisch angedeutetes Karussell sowie ein Grundgestellt 103, auf dem dieses Karussell drehbar gelagert vorgesehen ist. Das Portal 102 verfügt über eine Öffnung 150. Durch diese können einem Karussell des Behälterbehandlungsmoduls 102 beispielsweise über Drehsterne zu behandelnde Behälter zugeführt werden. Dabei kann es sich bei dem Behälterbehandlungsmodul beispielsweise um eine Etikettiervorrichtung handeln, in der die Behälter etikettiert werden. Die Öffnung 150 wird dabei durch Bauteile des Portals 101 begrenzt. Insbesondere wird sie an den Seiten durch Verbindungsteile 105 und 105' begrenzt. Die Oberseite der Öffnung wird durch ein Oberteil begrenzt, wobei sich das Oberteil von einem Verbindungsteil zum anderen Verbindungsteil 105, 105' erstreckt. Die untere Seite der Öffnung 150 wird durch ein Stützteil 104 des Portals begrenzt. Diese Begrenzung muss nicht vollständig sein sondern kann auch Unterbrechungen aufweisen. Das Stützteil 104 dient neben der Begrenzung der Öffnung 150 dem Abstützen des Portals am Boden einer Werkshalle oder Ähnlichem. In vorteilhafter Weise kann das Oberteil 107 mit dem Behälterbehandlungsmodul 102 verbunden sein, hier vorzugsweise mit dem Karussell, so dass eine Drehmomentabstützung vom Karussell durch das Oberteil 107 ermöglicht wird.

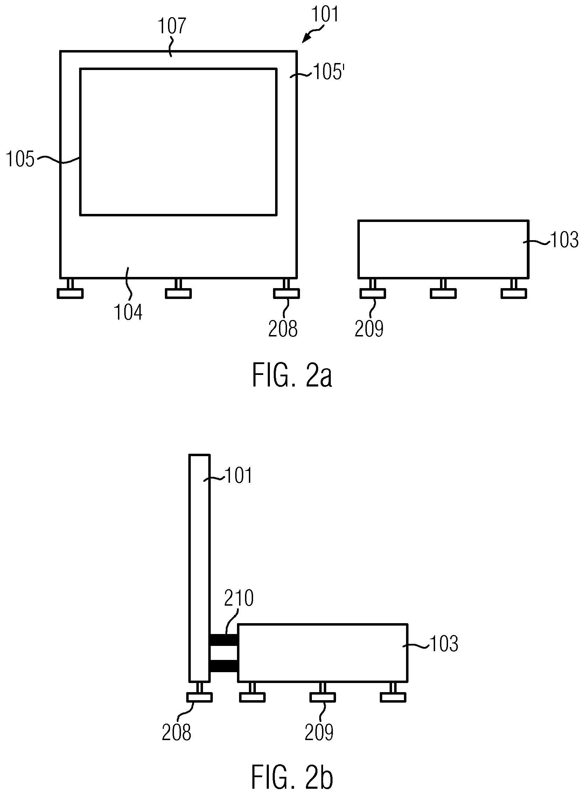

Fig. 2a zeigt das Portal 101 und das Grundgestell 103 separat. Das Portal und das Grundgestell 101 bzw. 103 sind modular vorgesehen. Das bedeutet, dass sie vorzugsweise einzeln gefertigt und dann über vorzugsweise lösbare Verbindungen wie Verschraubungen, miteinander verbunden werden können. Sowohl das Portal 101 als auch das Grundgestell 103 verfügen vorzugsweise über Stützen 208 bzw. 209. Diese dienen der Abstützung und Justage dieser Bauteile.

Fig. 2b zeigt eine mögliche Realisierung der Verbindung 210 zwischen Grundgestell 103 und Portal 101. Auch wenn diese Verbindung hier über Bolzen dargestellt ist, kann sie auch beispielsweise über Einraster, Haken oder Ähnliches erfolgen, sofern diese Verbindungen so ausgelegt sind, dass sie, sobald einmal justiert, in der justierten Position eingestellt bleiben und es somit nicht zu unerwünschten Fehlstellungen während des Betriebs der Behälterbehandlungsmaschine kommt. Auch eine Verbindung mittels einer der weiter unten beschriebenen Tischplatten ist denkbar.

Weiterhin ist vorgesehen, dass für ein Sortiment von (verschiedenen) Behälterbehandlungsmodulen, wie beispielsweise Modulen für das Etikettieren oder Blasformen oder auch unterschiedlich großer Flaschen bzw. Behälter, stets dasselbe Portal 101 verwendet werden kann. Das bedeutet insbesondere, dass das Portal 101 bzw. die Portale 101 in einem solchen Sortiment stets über dieselben Abmessungen verfügen, obwohl die Abmessungen des Karussells und des Grundgestells 103 über das Sortiment variieren können. Um dies zu erreichen, weist das Portal 101 eine Größe auf, die an die unterschiedlichen Größen von Karussells angepasst ist. Das bedeutet insbesondere, dass für jede im Sortiment verwendete Größe eines Grundgestells 103 und eines Karussells das Portal groß genug ist, um ein Zuführen und Abführen von zu behandelnden Behältern zu ermöglichen.

Weiterhin kann vorgesehen sein, dass die Mittel zur Befestigung des Grundgestells 103 am Stützteil 104 des Portals so vorgesehen sind, dass entsprechende Mittel für jede Größe von Grundgestellen des Sortiments vorgesehen sind. So können beispielsweise für eine erste Größe eines Grundgestells 103 des Sortiments erste Mittel zur Befestigung vorgesehen sein, die am Stützteil angebracht sind und für eine zweite Größe eines zweiten Grundgestells 103 zweite Mittel zur Befestigung am Stützteil 104 des Portals vorgesehen sein. Die ersten und zweiten Mittel zur Befestigung können jeweils an unterschiedlichen Positionen vorgesehen sein, so dass sie an das jeweilige Grundgestell 103 angepasst sind. Sie können alternativ auch in Form einer Führung vorgesehen sein, an der die entsprechenden Mittel zur Befestigung angebracht sind und die entsprechend der Größe des Grundgestells an die vorgesehenen Positionen gebracht werden.

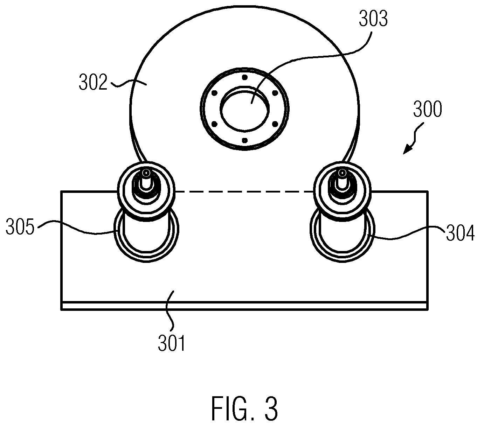

Fig. 3 zeigt eine Tischplatte 300, die beispielsweise mit einer der erfindungsgemäßen Behälterbehandlungsmaschinen kombiniert werden könnte. Diese Tischplatte 300 umfasst einen Drehsternbereich 301, der über Mittel zum Anordnen und (drehbar) Lagern von wenigstens einem Drehstern verfügt. Diese Mittel 304 und 305 können beispielsweise in Form von Öffnungen oder Bohrungen vorgesehen sein, in die z.B. eine Welle zum Antrieb eines Drehsterns eingelassen werden kann und der Drehstern darauf montiert wird. Weiterhin umfasst die Tischplatte 300 einen Karussellbereich 302, in dem ein Karussell angeordnet und beispielsweise über eine Welle drehbar gelagert und mit der Tischplatte verbunden werden kann. Auch dieses Mittel 303 kann beispielsweise in Form einer Bohrung oder Öffnung in der Tischplatte vorgesehen sein.

Drehsternbereich 301 und Karussellbereich 302 sind dabei beispielsweise über die gestrichelt dargestellte Linie eingeteilt. Auch wenn andere Einteilungen möglich sind, erweist sich diese doch als zweckmäßig. In dem hier dargestellten Beispiel ist der Drehsternbereich 301 dann als Rechteck ausgebildet. Hier sind jedoch auch beliebige andere Formen, die beispielsweise an bestimmte Behälterbehandlungsmaschinen angepasst sein können, denkbar. Auch die Ausbildung des Karussellbereichs 302 in Form eines Kreisteils ist so nicht zwingend und kann gemäß bestimmten Anforderungen an die Behälterbehandlungsmaschine, in der die Tischplatte zum Einsatz kommen soll, verändert werden.

Insbesondere könnte vorgesehen sein, dass die Tischplatte bzw. ein Sortiment von Tischplatten in einer Vielzahl von Behälterbehandlungsmaschinen zum Einsatz kommen kann. Zur Vereinfachung der Fertigung der Tischplatte ist daher vorgesehen, dass bestimmte Abmessungen standardisiert für jede Tischplatte des Sortiments an Tischplatten sind.

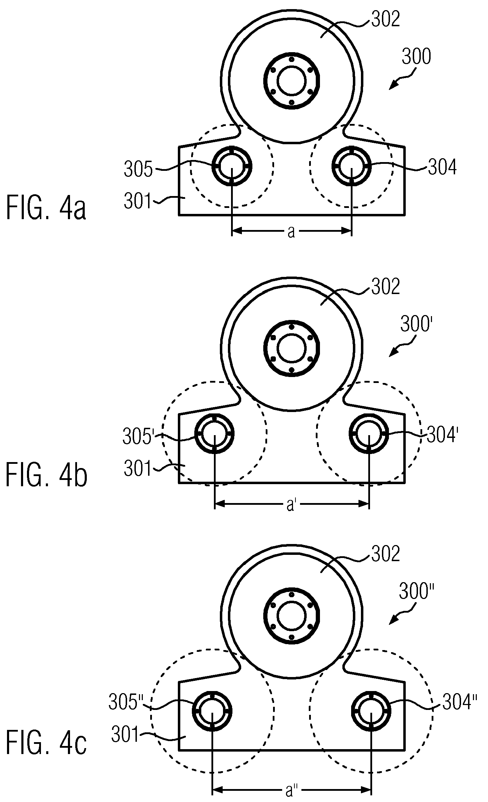

Dazu zeigt Fig. 4a-c Tischplatten 300 bis 300", wobei unterschiedliche Drehsterne zum Einsatz kommen. Diese Drehsterne können beispielsweise durch unterschiedliche Größen oder unterschiedliche erforderliche Positionen in Bezug auf das Karussell, zu dem sie Behälter zuführen oder abführen sollen, charakterisiert sein. Dazu sind in den Fig. 4a bis 4c die Drehsterne und das Karussell durch angedeutete Kreise dargestellt. Die Berührungspunkte dieser Kreise geben jeweils den Übergabepunkt eines Behälters an. Abhängig von dieser Übergabeposition wird daher die Position der Befestigung der Drehsterne im Drehsternbereich 301 der Tischplatten 300 bis 300" festgelegt.

In Fig. 4a ist eine Tischplatte 300 mit einem Karussellbereich 302 und einem Drehsternbereich 301 dargestellt. Die hier dargestellten Öffnungen zur Aufnahme der Drehsterne bzw. der sie antreibenden Wellen 304 und 305 sind an bestimmten Positionen angeordnet und haben einen Abstand a zueinander. Dieser Abstand ergibt sich aus der Position des Mittels zur Befestigung des Karussells 303, wie in Fig. 3 dargestellt sowie der Größe des Karussells selbst und der Größe der Drehsterne, denn es gilt, dass der Abstand der Drehachse des Karussells und eines Drehsterns wenigstens gleich der Summe der Radii des Karussells und des Drehsterns sein muss.

In Fig. 4b ist eine weitere Tischplatte 300' dargestellt. Diese weist aus Anschaulichkeitsgründen denselben Karussellbereich 302 (hierunter ist auch zu verstehen, dass das Karussell dieselben Abmessungen wie in Fig. 4a haben soll) auf, wie die in Fig. 4a dargestellte Tischplatte. Allerdings kommen hier Drehsterne zum Einsatz, die einen anderen Durchmesser als die aus Fig. 4a haben, weshalb die Bohrungen 304' und 305' an anderen Stellen angebracht werden müssen, so dass das Vorhandensein eines geeigneten Übergabepunktes von Behältern von den Drehsternen zum Karussell oder anders herum gegeben ist. Der Abstand dieser Bohrungen 304' und 305' beträgt daher a'. Dennoch ist der Drehsternbereich 301 in Fig. 4b von seinen äußeren Abmessungen her der gleiche wie in Fig. 4a.

Fig. 4c zeigt eine Tischplatte 300", in der noch größere Drehsterne eingelassen werden sollen, weshalb die Bohrungen 304" und 305" den Abstand a" aufweisen, der noch größer ist als der Abstand a'. Auch hier sind die äußeren Abmessungen des Drehsternbereichs 301 dennoch dieselben.

Da das Verschieben von Bohrungen bei der Herstellung von Tischplatten technisch relativ einfach zu realisieren ist, erleichtert sich die Fertigung erheblich, da für die Tischplatten des vorgesehenen Sortiments Platten verwendet werden können, die stets die gleichen äußeren Abmessungen des Drehsternbereichs aufweisen. Ist darüber hinaus die Größe des Karussells, das in dem Sortiment der Behälterbehandlungsmaschinen zum Einsatz kommen soll, immer dieselbe, bleibt die äußere Form der Tischplatte über das ganze Sortiment identisch und nur die Positionen der Bohrungen bzw. der Mittel zur Befestigung der Drehsterne 304 und 305 müssen variiert werden.

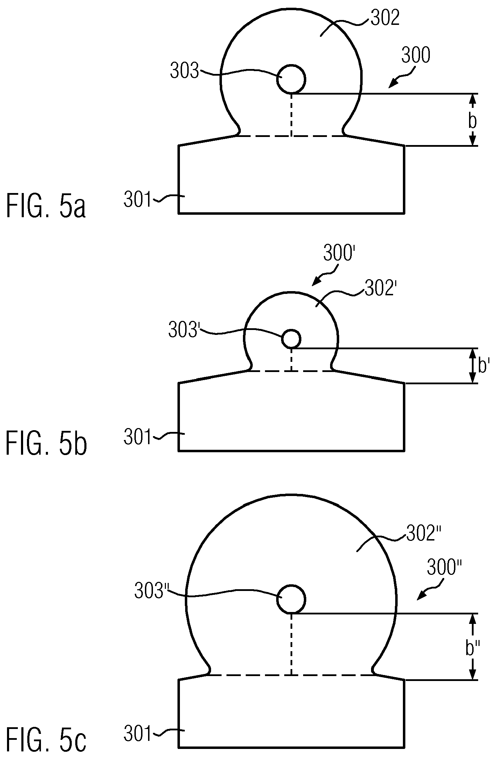

Fig. 5a-c zeigt eine weitere Möglichkeit der Modifikation der in Fig. 3 dargestellten Tischplatte 300. Hierbei wird ein Sortiment von Tischplatten vorgesehen, die für verschieden große Karussells geeignet sein sollen. Gemäß Fig. 5a ist ein Drehsternbereich 301 mit der dargestellten gestrichelten Begrenzung vorgesehen und ein Karussellbereich 302, auf dem das Karussell über das Mittel 300 angebracht werden kann. Der Karussellbereich ist in seiner Größe und Form vorzugsweise an das Karussell angepasst. Der Abstand des Mittels zur Befestigung des Karussells 303 zum Drehsternbereich 301, der hier mit b angegeben ist, wird der Einfachheit halber als charakteristische Größe für die folgenden Überlegungen angenommen. Da bei gegebener, für die folgenden Beispiele als konstant angenommener Größe eines Drehsterns dieselbe Bedingung, die auch mit Bezug auf Fig. 4 beschrieben wurde, erfüllt werden muss, ist der Abstand b in der Tat eine charakteristische Größe.

Fig. 5b zeigt eine weitere Tischplatte 300' für das Befestigen eines weiteren Karussells. Dieses Karussell kann beispielsweise kleiner ausgebildet sein als das in Fig. 5a beschriebene. Davon ausgehend, dass das Mittel zur Befestigung 303' des Karussells auch hier zentral im Karussellbereich 302' angeordnet ist, ergibt sich hier ein Abstand b' des Mittels zur Befestigung 303' zum Drehsternbereich 301, der kleiner ist als der in Fig. 5a dargestellte, um die Existenz eines Übergabepunktes für Behälter zu gewährleisten. Dennoch weist die Tischplatte 300' denselben Drehsternbereich 301 auf, wie in Fig. 5a dargestellt.

Fig. 5c zeigt nun eine Tischplatte 300", die ebenfalls über einen Drehsternbereich 301 mit denselben Abmessungen wie in den vorherigen Abbildungen verfügt. Sie ist jedoch für ein größeres Karussell ausgelegt oder erfordert daher einen größeren Karussellbereich 302" mit mittig angeordnetem Mittel 303" zur Befestigung eines Karussells. Der Abstand dieses Mittels 303" zum Drehsternbereich 301 beträgt daher b" und ist größer als der Abstand b und b' aus den Abbildungen 5a und 5b.

Zusammenfassend gestatten diese Beispiele eine Fertigung eines Sortiments von Tischplatten, die in einen Drehsternbereich und einen Karussellbereich unterteilt werden können. Der Drehsternbereich ist dabei, wie in den Fig. 4a-c und 5a-c dargestellt, von den äußeren Abmessungen her für das gesamte Sortiment stets gleich dimensioniert. Der Karussellbereich kann abhängig von bestimmten Erfordernissen oder der Größe eines darauf zu befestigenden Karussells unterschiedliche Größen aufweisen. Der Fertigungsprozess wird jedoch durch die konstante Dimensionierung des Drehsternbereichs erheblich erleichtert. Das Vorsehen von unterschiedlich positionierten Mitteln zur Befestigung der Drehsterne in Abhängigkeit der Größe dieser Drehsterne und der Karussells ist fertigungstechnisch einfacher umzusetzen als maßgeschneiderte Tischplatten für jede denkbare Konstellation von Karussellgröße und Drehsterngröße.

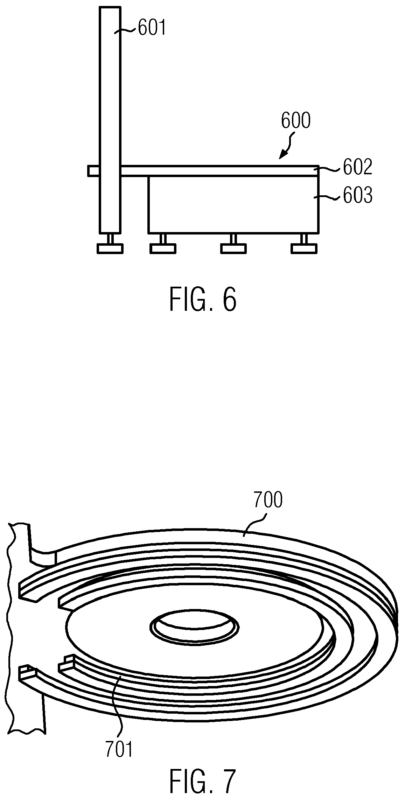

Fig. 6 zeigt noch einen weiteren Vorteil entsprechend dimensionierter Tischplatten. So kann die Tischplatte 600 genutzt werden, um eine Verbindung zwischen einem Grundgestell 602, auf dem ein Karussell angebracht werden kann und einem Portal, durch das über die an der Tischplatte anbringbaren Drehsterne Behälter befördert werden können, zu schaffen. Bei diesem Portal 601 und dem Grundgestell 602 kann es sich beispielsweise um die in Fig. 1 diskutierten Bauteile handeln. Da, wie mit Bezug auf Fig. 4 beschrieben, der Drehsternbereich stets die gleichen Abmessungen für das gesamte Sortiment von Behälterbehandlungsmaschinen aufweisen soll, kann er in ein, wie in Fig. 1 beschriebenes, standardisiertes Portal, das für ein entsprechendes Sortiment von Behälterbehandlungsmaschinen stets gleiche Abmessungen aufweist, eingepasst werden und ermöglicht eine entsprechende Positionierung von Drehsternen. Da andererseits die Größe des Karussellbereichs 602 an die Größe des Karussells angepasst ist, kann die Tischplatte 600 ein stets passgenaues Anbringen des Karussells auf dem Grundgestell 602 gegenüber dem Portal 601 ermöglichen, so dass zusätzliche aufwändige Justagearbeiten reduziert werden können.

Fig. 7 zeigt ein weiteres Beispiel einer Tischplatte 700. Diese umfasst wenigstens eine Befestigungsanordnung 701, an der vorzugsweise vollumfänglich oder im Bereich der hier abgebildeten C-Form der Befestigungsanordnung, Behandlungsaggregate oder andere Vorrichtungen befestigt werden können. Dabei handelt es sich beispielsweise um Etikettieraggregate, die an der Peripherie der Tischplatte 700 angeordnet werden können. Die Tischplatte 700 umfasst weiterhin vorzugsweise Mittel, um beispielsweise Drehsterne und/oder ein Karussell zu befestigen, wie in den vorangegangenen Figuren beschrieben wurde.

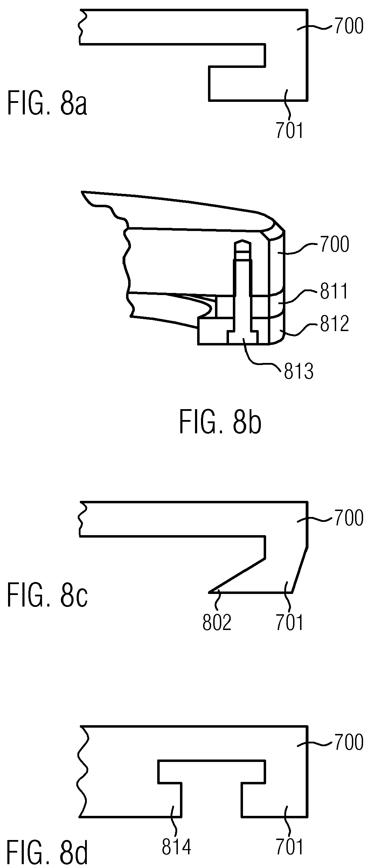

Fig. 8a-d zeigt beispielhafte Realisierungen der Befestigungsanordnungen.

Gemäß Fig. 8a ist die Befestigungsanordnung 701 und die Tischplatte 700 als einstückiges Werkstück vorgesehen. Die Befestigungsanordnung 701 kann dabei in ihrer Form beispielsweise aus einem massiven Werkstück, aus dem die Tischplatte gefertigt werden soll, herausgefräst werden. So wird eine erhebliche Stabilisierung der Befestigungsanordnung erreicht und auch eine Positionierung von Behandlungsaggregaten kann in immer gleicher Weise ohne Verstellung oder Feinjustage erfolgen.

In Fig. 8b ist ein alternatives Beispiel der Befestigungsanordnung dargestellt. In diesem ist vorgesehen, dass an die Tischplatte 700 ein oder mehrere ringförmige Elemente 811 und 812 beispielsweise mittels Verschraubungen 813 befestigt werden. Solche Ringelemente sind fertigungstechnisch leicht herzustellen und erlauben eine variable Anpassung der Befestigungsanordnung für spezielle Zwecke. Insbesondere können die einzelnen Ringelemente unterschiedliche Formen aufweisen, wodurch beispielsweise erreicht werden kann, dass nur bestimmte Behandlungsaggregate an der Tischplatte befestigt werden können. Die Befestigungsanordnung übernimmt dann, zusammen mit dem daran anzuordnenden Behandlungselement, die Funktion eines Schlüssel-Schloss-Prinzips.

Fig. 8c zeigt eine alternative Realisierung der Befestigungsanordnung 701. Dabei ist zusätzlich eine Abschrägung 802 bzw. Einkerbung vorgesehen, die in dem dargestellten Beispiel von einer gedachten Achse V eines an der Tischplatte anordenbaren Karussells wegweisend ausgebildet ist. Sie kann auch so vorgesehen sein, dass sie zu der Achse V hinweist, wobei sie in diesem Fall den Vorteil bietet, dass Behandlungselemente durch die Einkerbung in die Befestigungsanordnung geführt werden. Somit wird ein Einführen und Befestigen von Behandlungselementen erreicht, das möglichst störungsfrei, insbesondere ohne Verkantung abläuft. Obwohl die in Fig. 8c dargestellte Realisierung mittels Einkerbung hier nur für ein einstückiges Werkstück, bestehend aus der Befestigungsanordnung und der Tischplatte, dargestellt ist, kann sie auch mit Hilfe der mit Bezug auf Fig. 8b beschriebenen ringförmigen Bauteile, die die Befestigungsanordnung bilden, realisiert werden. Dabei wird dann vorzugsweise eines der ringförmigen Bauteile mit der Einkerbung versehen.

Fig. 8d zeigt ein weiteres alternatives Beispiel der Befestigungsanordnung 701. Dabei ist zusätzlich zu der bereits dargestellten Befestigungsanordnung eine dieser gegenüberliegende Befestigungsanordnung 814 vorgesehen, so dass eine Befestigung eines Behandlungsaggregats oder ähnlicher Bauteile von zwei Seiten erfolgt, wodurch die Stabilität weiter erhöht wird. Diese zweite Befestigungsanordnung 814 kann entweder durch weiter innen liegende ringförmige Bauteile realisiert werden oder über entsprechendes Fräsen eines massiven Werkstücks, das zur Tischplatte mit Befestigungsanordnung geformt werden soll. Auch Kombinationen sind denkbar, wobei beispielsweise die in Fig. 8d mit Bezugszeichen 701 bezeichnete Befestigungsanordnung über Ausfräsen erzeugt wird und die zweite Befestigungsanordnung 814 mit Hilfe von ringförmigen Bauelementen oder umgekehrt.

Grundsätzlich ist die Form der Befestigungsanordnung flexibel. Vorzugsweise wird sie jedoch in Form eines voll um den Umfang der Tischplatte sich erstreckenden Kreises oder einer C-Form, wie in Fig. 7 dargestellt, realisiert. Es ist auch denkbar, mehrere Befestigungsanordnungen an einem gedachten Kreis am Umfang anzuordnen, die zueinander beabstandet sind, so dass nur an bestimmten Stellen Behandlungsaggregate befestigt werden können. In diesem Fall kann es auch vorteilhaft sein, die Befestigungsanordnungen jeweils als nur für ein bestimmtes Behandlungsaggregat geeignet auszubilden, wie beispielsweise durch eine bestimmte Form oder Länge der Befestigungsanordnung.

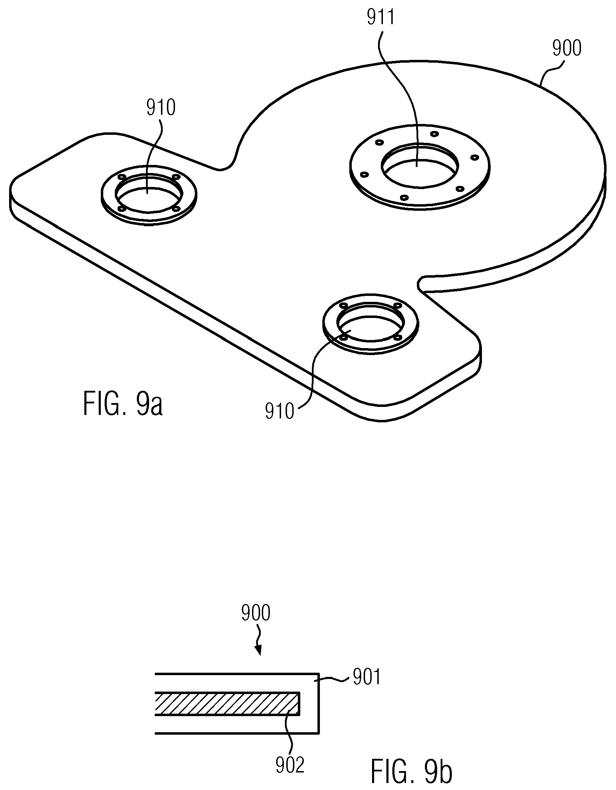

Fig. 9 zeigt eine Tischplatte. Dabei ist in Fig. 9a eine Außenansicht und in Fig. 9b ein Querschnitt durch diese Tischplatte 900 dargestellt. Gemäß Fig. 9a umfasst die Tischplatte 900 vorzugsweise Bohrungen 910 und 911, in die Wellen oder Befestigungen für Drehsterne (Bohrungen 910) und gegebenenfalls ein Karussell (Bohrung 911) eingelassen werden können. Die Tischplatte 900 ist dabei mit einer Beschichtung versehen. Diese erstreckt sich vorzugsweise über die gesamte Tischplatte, kann jedoch auch nur an bestimmten Stellen vorgesehen sein. Die Beschichtung kann bestimmte vorteilhafte Eigenschaften aufweisen. Beispielsweise kann sie besonders leicht zu reinigen oder schmutzabweisend (Lotuseffekt) sein. Sie kann auch Noppen aufweisen, um Etiketten am Klebenbleiben zu hindern. Die Beschichtung kann auch mehrschichtig ausgebildet sein, wobei jede Schicht an bestimmte Anforderungen angepasst sein bzw. bestimmte Eigenschaften aufweisen kann.

In Fig. 9b ist ein Querschnitt der Tischplatte 900 dargestellt. Die Tischplatte 900 besteht vorzugsweise aus einem einstückigen massiven Kern 902, der beispielsweise aus Edelstahl oder einem anderen Stoff bestehen kann. Dieser Kern ist von einer Beschichtung 901 umgeben. Diese Beschichtung kann beispielsweise aus Kunststoff gefertigt sein und unter anderem im Rahmen eines Spritzgussverfahrens auf das Kernmaterial aufgebracht werden. Die in Fig. 9a dargestellten Bohrungen können entweder vor dem Beschichtungsprozess des Kernmaterials 902 oder nach dem Beschichtungsprozess des Kernmaterials 902 in die Tischplatte eingebracht werden. Das Kernmaterial weist vorzugsweise eine Dicke von 2 mm bis 1 cm auf. Die Beschichtung kann sich ebenfalls von wenigen mm bis zu mehreren cm erstrecken.

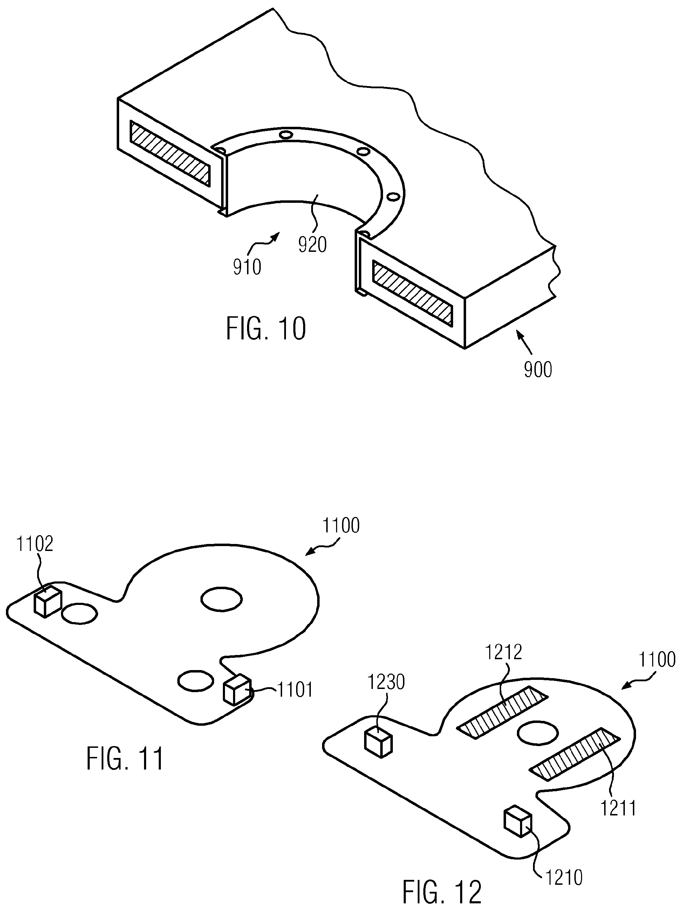

Fig. 10 zeigt eine weitere beispielhafte Tischplatte 900, bei der die Bohrungen durch ringförmige Elemente 920 begrenzt werden. Diese Elemente 920 werden in die Bohrungen eingelassen und haben vorzugsweise das dargestellte Profil, so dass sie auf der Oberseite und Unterseite der hier dargestellten Tischplatte sich über einen Bereich der Beschichtung erstrecken. Da in die Bohrungen 910 und 911 Bauteile, wie beispielsweise Wellen oder Ähnliches eingesetzt werden, um bestimmte Aggregate zu fixieren, kann es sich als vorteilhaft erweisen, wenn das ringförmige Bauteil aus einem stabilen Material, beispielsweise Edelstahl, besteht und gleichzeitig eine spezifische Form aufweist, die z.B. das Einlassen von Wellen in nur einer bestimmten Ausrichtung ermöglicht. So werden Fehler beim Aufbau vermieden. Obwohl das ringförmige Bauteil 920 hier als separates Bauteil dargestellt ist, das in die Bohrung eingelassen wird, nachdem die Beschichtung erfolgt ist, kann dieses ringförmige Bauteil auch als Auswölbung des Kernmaterials 902 aus Fig. 9 vorgesehen sein. Die Beschichtung würde dann zwar bis an diese Auswölbung heranreichen, das Kernmaterial würde jedoch in diesem Bereich freiliegen. In einem solchen Fall ist es vorteilhaft, wenn das Kernmaterial Edelstahl ist. Ist das Kernmaterial jedoch vollständig von der Beschichtung umschlossen, so kann es auch aus günstigeren Materialien, wie beispielsweise Aluminium oder Nicht-Edelstahl bestehen. Zusätzlich kann es für die Fertigung vorteilhaft sein, wenn Tischplatten stets mit gleich großen Bohrungen versehen werden und eine Anpassung für ein Sortiment, in dem beispielsweise verschieden dicke Wellen genutzt werden, über verschiedene ringförmige Bauteile erfolgt.

Fig. 11 zeigt eine weitere Tischplatte 1100. Auf dieser Tischplatte sind zusätzlich zu etwaigen Bohrungen zur Befestigung von Drehsternen und eines Karussells Säulen 1101 und 1102 vorgesehen, in denen Platz zur Unterbringung von Motoren zum Betrieb beispielsweise der Drehsterne vorgesehen ist. Neben diesen Säulen können auch Leitungskanäle vorgesehen sein, die zur Aufnahme von beispielsweise Stromkabeln oder Elektronikverbindungen geeignet sind. So wird ein Schutz dieser empfindlichen Bauteile vor Umwelteinflüssen erreicht.

Fig. 12 zeigt eine Realisierung dieser Tischplatte von der Unterseite, wobei aufgrund der Platzersparnis, die durch das Anbringen von Motoren in Säulen auf der Oberseite erzielt wird, die Unterseite Platz bietet, um weitere Geräte (1210, 1211, 1212, 1213) unterzubringen, wie beispielsweise Stromversorgungen oder Leitungen sowie Pneumatiken. Die Ausführungsform der Tischplatte in dieser Form erlaubt eine Kopplung der sich drehenden Teile, wie beispielsweise Drehsterne mit Hilfe elektronischer Mittel, d.h. also nur über Kabelverbindungen, ohne dass Wellen zur Übertragung des Drehmoments erforderlich wären, wodurch die gesamte Anordnung erheblich leichter und weniger störanfällig wird. An der Unterseite können aufgrund der erzielten Platzersparnis auch Stromversorgungen und Schmiersysteme untergebracht sein. So wird eine erheblich kompaktere Bauweise erzielt.

## Patentansprüche

1. Behälterbehandlungsmaschine, insbesondere eine Etikettiermaschine, umfassend ein Portal (101) und ein Grundgestell (103) mit einem Karussell zur Aufnahme von Behältern zur Behandlung, wobei das Portal (101) eine Öffnung (150) umfasst, durch die zu behandelnde Behälter zum Karussell befördert werden können, **dadurch gekennzeichnet, dass** die Öffnung durch die Bauteile des Portals begrenzt ist, welche Bauteile sind: ein Stützteil (104), an dem Stützen zum Abstützen des Portals am Boden vorgesehen sind, ein Oberteil (107), an dem zumindest ein Teil des Karussells befestigt ist, und zwei Verbindungsteile (105, 105'), die das Stützteil und das Oberteil miteinander verbinden, wobei sich das Oberteil (107) von einem Verbindungsteil (105) zum anderen Verbindungsteil erstreckt (105'),
wobei das Oberteil (107) derart mit dem Karussell verbunden ist, dass eine Drehmomentstützung vom Karussell durch das Oberteil erfolgt.

2. Behälterbehandlungsmaschine nach Anspruch 1, **dadurch gekennzeichnet, dass** am Portal (101) wenigstens eine Komponente für den Betrieb der Behälterbehandlungsmaschine, vorzugsweise ein Schaltschrank, oder eine Elektro- oder eine Pneumatikkomponente, vorgesehen ist.

3. Behälterbehandlungsmaschine nach Anspruch 1 oder 2, **dadurch gekennzeichnet, dass** das Grundgestell (103) wenigstens am Stützteil durch Mittel zur Befestigung befestigt ist.

4. Behälterbehandlungsmaschine nach einem der Ansprüche 1 bis 3, **dadurch gekennzeichnet, dass** das Grundgestell (103) Stützen zum Abstützen (208, 209) des Grundgestells am Boden umfasst.

5. Sortiment von Behälterbehandlungsmaschinen nach einem der Ansprüche 1 bis 4, **dadurch gekennzeichnet, dass** Abmessungen des Portals (101) für jede der Behälterbehandlungsmaschinen des Sortiments von Behälterbehandlungsmaschinen identisch sind, die Größe des Karussells jedoch verschieden ist.

## Claims

1. A machine for treating containers, particularly a labeling machine, comprising a portal (101) and a base support (103) with a carrousel for receiving containers to be treated therein, wherein
the portal (101) has an opening (150) for transporting containers to be treated to the carrousel,
**characterized in that**
said opening is defined by the components of the portal, which components are: a support element (104) provided with supports for supporting said portal at the ground, an upper part (107) to which at least a part of said carrousel is fastened, and two connecting elements (105, 105') for connecting said support element and said upper part with one another, wherein said upper part (107) extends from one connecting element (105) to the other connecting element (105'),
wherein said upper part (107) is connected to the carrousel such that a torque support of the carrousel is performed by the upper part.

2. The machine for treating containers according to claim 1, **characterized in that** the portal (101) is provided with at least one component for operating the machine for treating containers, preferably a control cabinet or an electric or a pneumatic component.

3. The machine for treating containers according to one of claims 1 or 2, **characterized in that** the base support (103) is at least fastened to the support element by fastening means.

4. The machine for treating containers according to one of claims 1 to 3, **characterized in that** the base support (103) comprises supports for supporting (208, 209) the base support at the ground.

5. An assortment of machines for treating containers according to one of claims 1 to 4, **characterized in that** portal (101) dimensions of each of the machines for treating containers of said assortment of machines for treating containers are identical, but the size of the carrousel is different.

## Revendications

1. Machine de traitement de récipients ou contenants, notamment une machine d'étiquetage, comprenant un portique (101) et un bâti de base (103) avec un plateau rotatif ou carrousel destiné à accueillir des récipients ou contenants pour leur traitement, le portique (101) présentant une ouverture (150) à travers laquelle des contenants à traiter peuvent être amenés au carrousel,
**caractérisée en ce que** l'ouverture est délimitée par les parties constitutives du portique, ces parties constitutives étant : une partie de support (104) sur laquelle sont prévus des supports pour l'appui du portique au sol, une partie supérieure (107) sur laquelle est fixée au moins une partie du carrousel, et deux parties de liaison (105, 105'), qui relient entre elles la partie de support et la partie supérieure, la partie supérieure (107) s'étendant d'une partie de liaison (105) à l'autre partie de liaison (105'), et la partie supérieure (107) étant reliée au carrousel de manière à ce que soit réalisée une reprise de couple du carrousel par la partie supérieure.

2. Machine de traitement de contenants selon la revendication 1, **caractérisée en ce que** sur le portique (101) est prévu au moins un composant pour le fonctionnement de la machine de traitement de contenants, de préférence une armoire de commande, ou un composant électrique ou pneumatique.

3. Machine de traitement de contenants selon la revendication 1 ou la revendication 2, **caractérisée en ce que** le bâti de base (103) est fixé au moins à la partie de support, par des moyens de fixation.

4. Machine de traitement de contenants selon l'une des revendications 1 à 3, **caractérisée en ce que** le bâti de base (103) comprend des supports pour l'appui (208, 209) du bâti de base au sol.

5. Assortiment de machines de traitement de contenants selon l'une des revendications 1 à 4, **caractérisé en ce que** des dimensions du portique (101) sont identiques pour chacune des machines de traitement de contenants de l'assortiment de machines de traitement de contenants, la grandeur du carrousel étant toutefois différente.
